(19) **Europäisches Patentamt**
**European Patent Office**
**Office européen des brevets**

(11) Publication number : **0 523 191 B1**

(12) # EUROPEAN PATENT SPECIFICATION

(45) Date of publication of patent specification :
**10.05.95 Bulletin 95/19**

(51) Int. Cl.⁶ : **F16D 69/02, C08J 5/14**

(21) Application number : **91916138.0**

(22) Date of filing : **06.09.91**

(86) International application number :
**PCT/GB91/01524**

(87) International publication number :
**WO 92/05370 02.04.92 Gazette 92/08**

(54) **IMPROVEMENTS IN OR RELATING TO BRAKE PADS.**

(30) Priority : **14.09.90 GB 9020070**

(43) Date of publication of application :
**20.01.93 Bulletin 93/03**

(45) Publication of the grant of the patent :
**10.05.95 Bulletin 95/19**

(84) Designated Contracting States :
**BE DE DK ES FR IT NL SE**

(56) References cited :
**EP-A- 0 000 839**
**EP-A- 0 000 841**
**EP-A- 0 050 377**
**GB-A- 2 016 027**
**GB-A- 2 068 978**
**US-A- 3 959 194**
**US-A- 4 217 255**

(73) Proprietor : **FERODO LIMITED**
**20 St. Mary's Parsonage**
**Manchester M3 2NL (GB)**

(72) Inventor : **CLARK, Eric 7 Maple Avenue**
**New Mills**
**Stockport SK12 3LE (GB)**

(74) Representative : **Crux, John Anthony T & N plc,**
**Group Patent Department et al**
**Bowdon House**
**Ashburton Road West**
**Trafford Park**
**Manchester M17 1RA (GB)**

EP 0 523 191 B1

## Description

This invention relates to brake pads and particularly brake pads of the kind which are used in disk brakes for automotive applications. "Automotive" in this context means road vehicles, including motorcycles, cars, vans, trucks, racing and rally cars.

Organic binder materials are in widespread use in the manufacture of brake pads, the common types being phenolic resins or modified phenolic resins with which a proportion of rubber such as SBR or Nitrile rubber is also often used. Many published patent specifications mention organic binder materials of this kind, for example, US-A-3959194 discloses the use of lead-free compositions including rubber and phenolic resin, for use in railway applications where a low abrasive characteristic is needed because railroad car wheels are made from relatively soft steel. There is also EP-A-0000841 which discloses non-asbestos brake pads which are made from a friction material containing a thermoset binder making up 20% to 45% by volume of the friction material at least half of which is phenol formaldehyde resin. EP-A-0000839 discloses a friction material for brake pads which contains a thermoset binder making up 20% to 60% by volume of the friction material at least half of the thermoset binder being phenol formaldehyde resin. EP-A-0184708 discloses a friction material for automotive uses which contains steel fibres and organic binder, the amount of organic binder being 10% to 35% by volume of the friction material. Although this latter specification mentions rubber as a possible binder, all the examples of the invention used resin, and there is nothing in the specification which suggests using low binder contents which are predominantly rubber.

Furthermore, none of these earlier proposals fully addresses the severe operating conditions to which automotive disk brake pads are subjected in use.

We have now found that disk brake pads with advantageous properties may be manufactured using a relatively low volume of rubber as a binder.

Thus according to the invention an automotive disk brake pad comprises a friction material containing fibres, particulate materials and an organic binder, wherein the binder is substantially all thermoset rubber and constitutes from 2% to 13% by volume of the friction material.

Conventionally it has been believed that rubber alone was not a satisfactory binder for automotive brake pads because of the very high temperatures they can reach during severe conditions (up to 1000°C on an Alpine pass descent). In the friction materials of the present invention we have found remarkably good properties, so much so that materials made in accordance with the invention have been successfully tested on a Formula 3000 racing car at speeds up to 180 miles per hour. This is despite the low volume of binder employed and the absence of conventional thermoset rubber.

The rubber used is preferably nitrile rubber, although other rubbers may be used as the whole or part of the binder, for example bromobutyl rubber, chlorobutyl rubber.

The other ingredients of the friction material may be selected from the wide range of available fibres, fillers and friction and wear modifiers.

Examples of possible fibres include metal fibres such as steel, mineral fibres such as glass or basalt, and organic fibres such as aramid. The amount of fibre used is not critical but will typically be in the range 0 to 15% by volume.

The balance of the friction material apart from binders and fibres is of particulate materials. The particulate materials used as fillers and friction and wear modifiers may be taken from a vast range of possible options. For example alumina, antimony trisulphide, zirconia, crushed coke, graphite, molybdenum disulphide, powdered metals such as copper, tin, brass, reinforcing fillers such as mica, vermiculite, wollastonite, and other fillers such as barytes, silica, calcium carbonate etc. Owing to the low volumes of binder used in this invention the particulate materials are used in the larger sizes of the conventional range eg 300μm to 600μm, and finely divided materials (ie particle sizes below 50μm) are to be avoided in order to ensure that there is not too much particle surface area to be wetted out by the binder.

The invention will now be described in more detail, by way of example only, with reference to the following Examples 1 to 4.

EXAMPLE 1 to 4

Friction materials were prepared according to the formulations given below in Table 1. In each case the dry ingredients were pre-blended, then intimately mixed with a solution of binder rubber in trichloroethylene. The mix was dried and disintegrated and then charged to a pre-forming die where they were pressed under a pressure of 7 tons/in$^2$ and moulded into a preform. The preform was cured by baking whilst held under light pressure in an oven for 2 hours at 240°C.

## TABLE 1

| EXAMPLE NO: | 1 | 2 | 3 | 4 |
|---|---|---|---|---|
| Ingredient | % Vol | % Vol | % Vol | % Vol |
| Nitrile Rubber | 12.0 | 10.21 | 3.00 | 10.00 |
| Sulphur | 4.29 | 3.35 | 4.29 | 4.29 |
| Steel Fibre | 5.0 | 3.00 | 3.00 | – |
| Vermiculite | 20.54 | 30.73 | 10.00 | 30.08 |
| Barytes | 17.26 | 8.09 | 26.08 | 16.40 |
| Petroleum Coke | 13.69 | 10.00 | 10.00 | 17.00 |
| Friction and Wear Modifiers | 24.22 | 34.62 | 43.63 | 22.23 |

Testing

Disc brake pads made according to Examples 1, 2, 3 and 4 a were tested for friction and wear in machine tests against cast iron brake disk. Fade and recovery behaviour of each material was tested in a severe sequence which consists of a "fade phase" of 20 successive stops from 130kph, followed by a "recovery phase" of 10 successive stops from 50kph. During the stops from high speed the pad temperature (which is constantly monitored) rises to very high levels and (during the stops from slower speeds the pad temperature gradually falls again. The results of these test are given below in tabular form in Table II.

## TABLE II

| EXAMPLE NO: | 1 | 2 | 3 | 4 |
|---|---|---|---|---|
| **Fade phase** | | | | |
| Max. mean coefficient of friction* | 0.43 | 0.39 | 0.41 | 0.39 |
| Min. mean coefficient of friction* | 0.33 | 0.33 | 0.36 | 0.36 |
| Initial pad temperature $^{o}C$ | 200 | 225 | 225 | 200 |
| Peak pad temperature $^{o}C$ | 670 | 650 | 690 | 700 |
| **Recovery phase** | | | | |
| Max. mean coefficent of friction* | 0.43 | 0.51 | 0.50 | 0.44 |
| Min. mean coefficient of friction* | 0.35 | 0.35 | 0.37 | 0.43 |
| Final pad temperature $^{o}C$ | 175 | 175 | 200 | 200 |

* In this table the expression "mean" coefficient of friction is used to refer to the average value of the coefficient of friction during a single stop, because it is normal to see some variation of the coefficient with time during each stop as the pad temperature rapidly rises.

It can be seen from Table II that the brake pads made according to each example showed excellent resistance to fade and consistency of friction during both phases of the test.

The wear rates of each pad have been found to be less than is usually seen in current commercially available pads. Pads made according to Example 1 have also been run 6,000 miles on a road car under varied conditions, and their projected life span from this is 60,000 miles.

For purposes of comparison, two conventional formulations were made into disk brake pads and subjected to testing, exactly as before. Table III contains the formulation details for Examples 5 and 6; Table IV contains the corresponding test results.

### TABLE III - Comparative formulations

| EXAMPLE NO: | 5 | 6 |
|---|---|---|
| Ingredient | % Vol | % Vol |
| Phenolic Resin | 17.91 | 18.85 |
| Nitrile Rubber | 6.03 | 6.35 |
| Sulphur | 3.18 | 3.35 |
| Steel Fibres | 10.00 | 10.53 |
| Barytes | 12.21 | 7.59 |
| Petroleum Coke | 20.95 | 15.21 |
| Friction and Wear Modifiers | 29.72 | 38.12 |

It will be appreciated that the above two formulations contain a significantly larger volume of binder, predominately comprised of phenolic resin. The test results set out in Table IV below show poor performance in comparison with Examples 1 to 4, the test performance of which was relatively stable. Examples 5 and 6 are typical of prior art systems where rubber and/or phenolic resin are present as a significantly greater proportion by volume of the disk pad. The reasons for this significant difference in performance are not entirely clear, but contrary to what might be expected, the use of a low volume of a rubber binder results in superior performance, but not in unwanted fragmentation, or even disintegration.

## TABLE IV – Comparative tests

| EXAMPLE NO: | 5 | 6 |
|---|---|---|

### Fade phase

| | 5 | 6 |
|---|---|---|
| Max. mean coefficient of friction | 0.35 | 0.35 |
| Min. mean coefficient of friction | 0.25 | 0.22 |
| Initial pad temperature °C | < 200 | < 200 |
| Peak pad temperature °C | 690 | 650 |

### Recovery phase

| | 5 | 6 |
|---|---|---|
| Max. mean coefficient of friction | 0.33 | 0.32 |
| Min. mean coefficient of friction | 0.27 | 0.26 |
| Final pad temperature % | < 200 | < 200 |

## Claims

1. An automotive disk brake pad which comprises a friction material containing fibres, particulate materials and an organic binder, characterised in that the binder is substantially all a thermoset rubber which constitutes from 2% to 13% by volume of the friction material.

2. A disk brake pad according to claim 1 characterised in that the thermoset rubber is selected from nitrile rubber, chlorobutyl rubber and bromobutyl rubber and mixtures thereof.

3. A disk brake pad according to claim 1 or 2 characterised in that the friction material contains fibres in an amount of 0% to 15% by volume.

4. A disk brake pad according to claim 3 characterised in that the fibres are steel fibres.

5. A disk brake pad according to any preceding claim characterised in that the friction material includes mica, vermiculite and/or wollastonite in an amount up to 35% by volume.

## Patentansprüche

1. Bremsbelag für Scheibenbremse für Fahrzeuge, welcher Belag ein Reibungsmaterial umfaßt, welches Fasern, teilchenfömiges Material und ein organisches Bindemittel enthält, dadurch gekennzeichnet, daß das Bindemittel im wesentlichen ausschließlich ein wärmehärtbarer Gummi ist, welcher von 2 bis 13 Vol.-% des Reibungsmaterials darstellt.

6

2. Bremsbelag für Scheibenbremse nach Anspruch 1, dadurch gekennzeichnet, daß der wärmehärtbare Gummi aus Nitrilgummi, Chlorbutylgummi und Brombutylgummi sowie Mischungen derselben gewählt ist.

3. Bremsbelag für Scheibenbremse nach Anspruch 1 oder 2, dadurch gekennzeichnet, daß das Reibungsmaterial Fasern in einer Menge von 0 bis 15 Vol.-% enthält.

4. Bremsbelag für Scheibenbremse nach Anspruch 3, dadurch gekennzeichnet, daß die Fasern Stahlfasern sind.

5. Bremsbelag für Scheibenbremse nach einem der vorangehenden Ansprüche, dadurch gekennzeichnet, daß das Reibungsmaterial Glimmer, Vermiculit und/oder Wollastonit in einer Menge von bis zu 35 Vol.-% umfaßt.

**Revendications**

1. Plaquette de frein à disque d'automobile qui comprend un matériau de friction renfermant des fibres, des matériaux particulaires et un liant organique, caractérisée en ce que le liant est pratiquement en totalité un caoutchouc thermodurci qui constitue de 2 % à 13 % en volume du matériau de friction.

2. Plaquette de frein à disque selon la revendication 1, caractérisée en ce que le caoutchouc thermodurci est sélectionné parmi le caoutchouc nitrile, le caoutchouc de chlorobutyle et le caoutchouc de bromobutyle et des mélanges de ceux-ci.

3. Plaquette de frein à disque selon la revendication 1 ou 2, caractérisée en ce que le matériau de friction renferme des fibres en une quantité de 0 % à 15 % en volume.

4. Plaquette de frein à disque selon la revendication 3, caractérisée en ce que les fibres sont des fibres d'acier.

5. Plaquette de frein à disque selon l'une quelconque des revendications précédentes, caractérisée en ce que le matériau de friction comprend du mica, de la vermiculite et/ou de la wollastonite en une quantité atteignant jusqu'à 35 % en volume.